# EUROPÄISCHE PATENTSCHRIFT

(11) **EP 0 416 478 B1**
(45) Veröffentlichungstag und Bekanntmachung des Hinweises auf die Patenterteilung: **26.04.1995**
(21) Anmeldenummer: 90116736.1
(22) Anmeldetag: 31.08.1990
(51) Int. Cl.: G02F 1/01, G02F 1/225

(54) **Verfahren zur Herstellung eines integrierten Lichtwellenleiters**
Integrated light waveguide manufacturing process
Procédé de fabrication d'un guide de lumière intégré

(30) Priorität: 05.09.1989 DE 3929410
(43) Veröffentlichungstag der Anmeldung: 13.03.1991
(73) Patentinhaber: Alcatel SEL Aktiengesellschaft, D-70435 Stuttgart (DE); ALCATEL N.V., NL-1077 XX Amsterdam (NL)
(72) Erfinder: Kersten, Peter, Dr., D-7250 Leonberg (DE); Hanisch, Helmut, D-7440 Nürtingen (DE)
(74) Vertreter: Gähr, Hans-Dieter, Dipl.-Ing. (FH)

(56) Entgegenhaltungen:
- EP-A- 0 218 938
- DE-A- 3 809 182
- FIRST INT. CONF. ON OPTICAL FIBRE SENSORS, APRIL1988; PAGES 72-74 K.K. WONG ETAL.: 'An improved electro-optic waveguide serrodyne frequency translator in x-cut LiNbO3 using proton-exchange'
- Journal of Molecular Electronics, Vol.1 (1985), pp.25-45; J.Zyss "Nonlinear Organic Materials for Integrated Optics: A Review".
- Applied Physics Letters, Vol.20, No.6, 15 March 1972, pp.213-215, R.Ulrich et al.: "Embossed Optical Waveguides".

## Beschreibung

Die Erfindung betrifft ein Verfahren zur Herstellung eines Lichtwellenleiters der auf einem transparenten Substrat integriert ist und an seinen Längsseiten Elektroden aufweist.

Aus der EP 0304602 A2 ist eine Anordnung bekannt, bei welcher ein Lichtwellenleiter auf einem Substrat integriert ist. Das Substrat hat elektrooptische Eigenschaften, d.h. es zeigt den Pockels-Effekt, und wird bevorzugt aus Lithiumniobat hergestellt. Wenn zwei Lichtwellenleiter in einer vorbestimmten Koppelstrecke in geringem Abstand auf der Oberfläche des Substrats nebeneinander verlaufen, läßt sich aus ihnen ein optischer Schalter bilden. Dazu ist im Bereich der Koppelstrecke der Lichtwellenleiter zum Anlegen einer Schaltspannung ein Elektrodenpaar über der Oberfläche des Substrats angeordnet und von ihr durch eine dielektrische Zwischenschicht getrennt. In der Koppelstrecke ist der geringe Abstand zwischen den beiden Lichtwellenleitern so bemessen, daß in Abhängigkeit von der Schaltspannung zwischen den Lichtwellenleitern eine Überkopplung von Licht auftritt. Die Lichtwellenleiter entstehen, indem von der Oberfläche des Substrats aus an den für sie vorgesehenen Bereichen ein Material mit einem höheren Brechungsindex eindiffundiert wird.

An diesem Lichtwellenleiter ist von Nachteil, daß die erforderlichen Diffusionsprozesse bei hohen Temperaturen ablaufen und die Abmessungen der Substrate durch die verfügbaren Lithiumniobat-Einkristalle begrenzt sind. Das Material Lithiumniobat hat darüber hinaus den Nachteil, daß sein Brechungsindex stark von dem des Glases einer Glasfaser abweicht. Daher entstehen beim Übertritt des Lichtes aus einem Glasfaser-Lichtwellenleiter zu einem Lithiumniobat-Lichtwellenleiter Einkoppelverluste.

Weiterhin ist aus der DE 38 09 182 A1 ein optisches Bauelement bekannt, bei dem ein Lichtwellenleiter aus optisch nichtlinearem Material in einem aus einem Si-Substrat herausgeätzten Kanal verläuft. Zur Herstellung des Kanals wird das Substrat zunächst mit einer SiO₂-Schicht abgedeckt, die an der Stelle, an der der Kanal geschaffen werden soll, eine schmale Öffnung besitzt. In einem nachfolgenden Ätzschritt wird das Si-Substrat unterhalb der Öffnung geätzt und so die den Kanal bildende Hohlform geschaffen. Zur optischen Isolation des in den Kanal einzubringenden Polymers vom Si-Substrat muß dann durch einen Temperungsschritt bei 1000 bis 1200°C auf dem Silizium innerhalb des Kanals eine Oxidschicht erzeugt werden. Schließlich muß das Polymer durch die schmale Öffnung in den wesentlich breiteren Kanal gepreßt oder gesaugt und letzterer mit einer glasähnlichen Schicht (SOG-Schicht) abgedeckt werden. Die Elektroden müssen in einem getrennten Prozeßschritt auf dem Si-Substrat erzeugt werden.

Die Herstellung eines derartigen Bauelementes ist, vor allem aufgrund der notwendigen Temperungsschritte sehr aufwendig. Bei der Befüllung des Kanals mit Polymer muß zudem größte Sorgfalt darauf verwendet werden, daß keine Lufteinschlüsse im Kanal verbleiben.

Es ist die Aufgabe der Erfindung, ein einfacheres Verfahren anzugeben, nach dem sich Lichtwellenleiter vielfältig auf einem Substrat integrieren lassen.

Bei dem Verfahren gemäß Patentanspruch 1 wird die Aufgabe dadurch gelöst, daß das Substrat auf seiner Oberfläche mit einer Metallschicht beschichtet wird, daß die Metallschicht dann teilweise so weggeätzt wird, daß metallische Streifen entstehen, daß das Substrat im Bereich zwischen den Streifen so geätzt wird, daß eine Nut entsteht, daß anschließend die metallischen Streifen bis auf solche Bereiche weggeätzt werden, die die Elektroden bilden sollen, und daß die Nut mindestens bis zur Höhe der Oberfläche dieser Bereiche mit einem Material aufgefüllt wird, das den elektrooptischen Effekt zeigt und den Lichtwellenleiter bildet.

Eine vorteilhafte Weiterbildung des Verfahrens ergibt sich aus dem Unteranspruch 2. Das hier vorgesehene Polymer kann auch höhere elektrooptische Koeffizienten als Lithiumniobat haben.

Ausführungsbeispiele der Erfindung werden anhand der Zeichnungen erläutert. Es zeigen:
- Fig. 1-6: einzelne Schritte des Verfahrens zur Herstellung eines Lichtwellenleiters und
- Fig. 7: einen elektrooptischen Modulator.

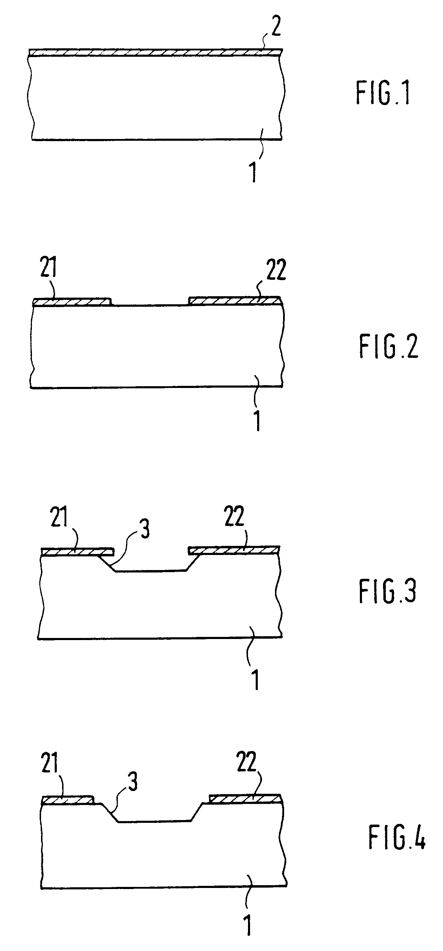

Ein transparentes Substrat 1 (Fig. 1) wird mit einer Metallschicht 2 aus Chrom und Gold bedampft. Die Metallschicht 2 (Fig. 2) wird anschließend photolithographisch so strukturiert, daß aus ihr zwei metallische Streifen 21, 22 entstehen. Der zwischen den Streifen verbleibende Spalt hat typischerweise eine Breite von 10 »m und eine Länge von 10-20 mm. Durch eine Ätzlösung wird das Substrat 1 (Fig. 3) im Bereich des Spaltes von seiner Oberfläche her abgetragen; dabei dienen die Streifen 21, 22 als Ätzmaske. Es entsteht eine Nut 3, die z. B. eine Tiefe von 2 »m hat. Die Nut 3 ist breiter als der zwischen den Streifen 21, 22 bestehende Spalt, weil die Streifen durch die Ätzlösung unterätzt werden. Daher wird in einem nächsten Schritt (Fig. 4) der Spalt durch Abätzen der Streifen, z.B. in einem weiteren photolithographischen Prozeß, verbreitert, so daß die Streifen 21, 22 die Nut 3 nicht mehr überragen.

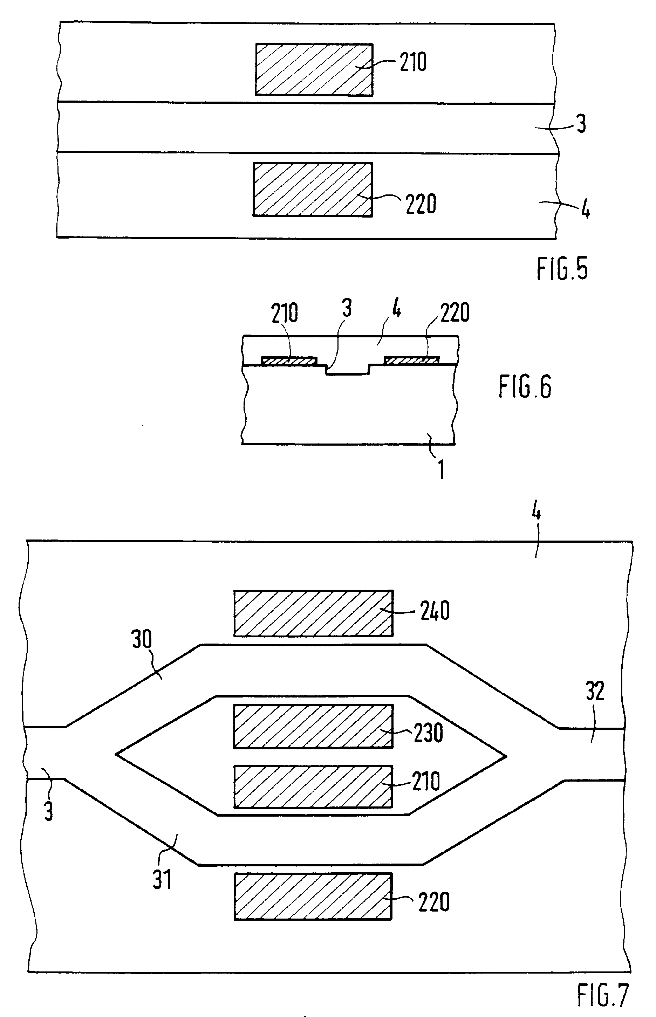

Aus den Streifen 21, 22 werden photolithographisch die Bereiche 210, 220 hergestellt (Fig. 5), die die Elektroden bilden. Fig. 5 stellt eine Draufsicht dar.

Schließlich wird das Substrat 1 (Fig. 6) mit einer Schicht 4 aus einem Material bedeckt, das elektrooptische Eigenschaften aufweist.

Dafür eignen sich besonders Polymere. Ein solches Polymer besteht z. B. aus Polymethylmethacrylat und einer darin gelösten oder chemisch gebundenen Azo- oder Stilbenverbindung. Das Polymer hat einen höheren Brechungsindex als das Substrat 1, damit das Licht in dem durch die Nut 3 gebildeten Lichtwellenleiter geführt wird.

Das Polymer wird oberhalb seines Erweichungspunktes durch eine Gleichspannung polarisiert und anschließend im elektrischen Feld abgekühlt. Dadurch erhält es seine elektrooptischen Eigenschaften, z.B. die, daß sich der Brechungsindex des Lichtwellenleiters zwischen den Elektroden durch Anlegen einer Spannung steuern läßt.

Wenn an die Elektroden eine Wechselspannung angelegt wird, bildet der Lichtwellenleiter an dieser Stelle einen Phasenmodulator.

Auf dem Substrat 1 lassen sich auch andere optische Komponenten, z. B. optische Schalter oder Richtkoppler integrieren.

Ein Mach-Zehnder-Interferometer (Fig. 7) besteht z.B. aus der Nut 3, die sich zu Nuten 30,31 verzweigt, welche zu einer Nut 32 wieder zusammengeführt sind. Die Nut 31 weist als Elektroden die Bereiche 210, 220, die Nut 30 entsprechend Bereiche 230, 240 auf. Die Bereiche 210, 230 lassen sich auch zu einem einzigen Bereich zusammenfassen. Durch Überlagerung des in den Nuten 30, 31 durch Anlegen einer Wechselspannung erzeugten phasenmodulierten Lichts entsteht in der Nut 32 amplitudenmoduliertes Licht.

## Patentansprüche

1. Verfahren zur Herstellung eines Lichtwellenleiters, der auf einem transparenten Substrat (1) integriert ist und an seinen Längsseiten Elektroden (210, 220) aufweist,
**dadurch gekennzeichnet,**
- daß das Substrat (1) auf seiner Oberfläche mit einer Metallschicht (2) beschichtet wird,
- daß die Metallschicht teilweise so weggeätzt wird, daß metallische Streifen (21, 22) entstehen,
- daß das Substrat im Bereich zwischen den Streifen so weggeätzt wird, daß eine Nut (3) entsteht,
- daß anschließend die metallischen Streifen bis auf solche Bereiche weggeätzt werden, die die Elektroden (210, 220) bilden, und
- daß die Nut (3) mindestens bis zur Röhe der Oberfläche dieser Bereiche mit einem Material aufgefüllt wird, das den elektrooptischen Effekt zeigt und den Lichtwellenleiter bildet.

2. Verfahren nach Anspruch 1,
dadurch gekennzeichnet,
daß als Material ein Polymer verwendet wird, das oberhalb seines Erweichungspunktes durch eine Gleichspannung polarisiert und anschließend abgekühlt wird.

## Claims

1. A method of manufacturing an optical waveguide integrated on a transparent substrate (1) and having electrodes (210, 220) at its long sides,
**characterized in**
- that the upper surface of the substrate (1) is covered with a metal layer (2),
- that parts of the metal layer are etched away to form metallic stripes (21, 22),
- that the substrate is etched in the area between the stripes to form a groove (3),
- that subsequently, the metallic stripes are etched leaving areas constituting the electrodes (210, 220), and
- that the groove (3) is filled, at least up to the level of the surface of said areas, with a material which exhibits the electrooptical effect and forms the optical waveguide.

2. A method as claimed in claim 1,
characterized in
that the material is a polymer which is polarized above its softening point by a DC voltage and subsequently cooled down.

## Revendications

1. Processus de fabrication d'un guide d'ondes lumineuses intégré à la surface d'un substrat transparent (1) et présentant des électrodes (210, 220) sur ses grands côtés, caractérisé en ce que:
- la surface du substrat (1) est revêtue d'une couche métallique (2),
- la couche métallique est en partie corrodée de sorte qu'il apparaît des bandes métalliques (21, 22),
- le substrat de la zone située entre les bandes est corrodé de telle sorte qu'il apparaît une rainure (3),
- les bandes métalliques sont ensuite corrodées à l'exception des zones qui constituent les électrodes (210, 220), et
- la rainure (3) est remplie, au moins jusqu'à hauteur de surface de ces zones, d'un matériau présentant l'effet électrooptique et composant le guide d'ondes lumineuses.

2. Processus selon la revendication 1,
caractérisé en ce que:
un polymère polarisé au-dessus de son point de ramollissement par une tension de courant continu et refroidi ensuite, est utilisé comme matériau.
